(19) Europäisches Patentamt
European Patent Office
Office européen des brevets

(11) **EP 2 384 595 B1**

(12) # EUROPEAN PATENT SPECIFICATION

(45) Date of publication and mention
of the grant of the patent:
**30.09.2015 Bulletin 2015/40**

(51) Int Cl.:
*H04W 52/24* *(2009.01)* *H04W 52/02* *(2009.01)*
*H04W 52/32* *(2009.01)* *H04W 52/14* *(2009.01)*

(21) Application number: **09799477.6**

(22) Date of filing: **31.12.2009**

(86) International application number:
**PCT/US2009/069892**

(87) International publication number:
**WO 2010/078476 (08.07.2010 Gazette 2010/27)**

(54) **POWER CONTROL IN A MULTI-LAYER CELLULAR COMMUNICATION SYSTEM**

LEISTUNGSREGELUNG IN EINEM MEHRSCHICHTIGEN ZELLULAREN
KOMMUNIKATIONSSYSTEM

RÉGULATION DE PUISSANCE DANS UN SYSTÈME DE COMMUNICATION CELLULAIRE
MULTICOUCHE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **02.01.2009 IN DE00032009**

(43) Date of publication of application:
**09.11.2011 Bulletin 2011/45**

(73) Proprietor: **Motorola Mobility LLC
Libertyville, IL 60048 (US)**

(72) Inventors:
 • **RAMACHANDRAN, Vinod, Kumar
  Chennai 600075 (IN)**
 • **HAN, Guang
  Arlington Heights
  IL 60004 (US)**
 • **HARRIS, John
  Glenview
  IL 60025 (US)**
 • **ARULSELVAN, Naveen
  Bangalore
  Karnataka 560093 (IN)**

 • **KALYANASUNDARAM, Suresh
  Banglaore
  Karnataka 560075 (IN)**

(74) Representative: **Openshaw, Paul Malcolm
  Openshaw & Co.
  8 Castle Street
  Farnham
  Surrey GU9 7HR (GB)**

(56) References cited:
**EP-A1- 1 039 657      WO-A1-2010/022287
WO-A2-02/101941      WO-A2-2009/099810
GB-A- 2 445 990      US-A1- 2009 280 819
US-A1- 2010 067 421**

 • **HO L T W ET AL: "Effects of User-Deployed, Co-
  Channel Femtocells on the Call Drop Probability
  in a Residential Scenario" IEEE INTERNATIONAL
  SYMPOSIUM ON PERSONAL, INDOOR AND
  MOBILE RADIO COMMUNICATIONS. PIMRC, XX,
  XX, no. 18TH, 1 September 2007 (2007-09-01),
  pages 1-5, XP031168359**

## Description

FIELD OF THE INVENTION

The invention relates to interference in a wireless cellular communication system and in particular, but not exclusively, to power control in cells in a multi-layer cellular communication system.

BACKGROUND OF THE INVENTION

A method which has been used to increase the capacity of cellular communication systems is the concept of hierarchical cells wherein a macro-cell layer is underlayed by a layer of typically smaller cells having coverage areas within the coverage area of the macro-cell. In this way, smaller cells, known as micro-cells, pico-cells, or femto-cells, are located within the same coverage area as larger macro cells. The pico-cells and femto-cells have much smaller coverage thereby allowing a much closer reuse of resources. Frequently, the macro-cells are used to provide coverage over a large area, and the smaller underlay cells are used to provide additional capacity in densely populated areas and hotspots, for example. Furthermore, femto-cells can also be used to provide coverage in specific locations such as within a residential home or office. In order to efficiently exploit the additional resource, it is important that any interference between the macro-cell layer and the underlying layer is minimized.

Currently 3rd generation (3G) cellular communication systems based on Code Division Multiple Access (CDMA) technology, such as the Universal Mobile Telecommunication System (UMTS), are being deployed with a trend towards introducing a large number of femto-cells in these 3G systems. For example, it is envisaged that a Home NodeB (HNB) may be deployed having a target coverage area of only a single residential dwelling or house. A widespread introduction of such a system would result in a very large number of small underlay cells within a single macro-cell.

Generally, during deployment of a cellular network of macro cells and underlay cells, it would be desirable for the planned layout to be fixed and known. In a centrally controlled database deployment process, well established techniques exist to calculate the optimal pilot power levels fro fixed and known layouts. For example, the underlay cells of such systems can receive a neighbor list identifying a number of neighbor cells and the underlay cells' measured pilot signal power levels of these neighbor cells. These levels for each neighbor macro-cell can be measured and reported back to the central database, such as in a radio network controller (RNC) or Mobile Switching Centre (MSC). The central database could then uses these measurements to determine an appropriate pilot power level for that underlay-cell. However, a problem arises in the introduction of underlaying cells, such as residential deployments of femto-cell HNBs where the deployment process is incremental, unilateral, changeable, and ad hoc.

In particular, a UMTS HNB may need to be able to operate on the same frequency (co-channel) as a macro layer cell in the UMTS network. Under these circumstances and without coordination between the RNC of the macro layer and the HNB layer, and considering a much smaller dynamic range of power control at the HNB, there are cases where the macro layer suffers interference from the control pilot channel power (e.g., CPICH) of the HNB in close proximity thereto and vice versa.

In addition, femto-cells are closed-access (i.e. not every user can connect to a particular femto-cell). In this case, ineligible users close to a femto-cell which denies access can experience high interference. In addition, due to the high density deployment of femto-cells, a UE may attempt to access a large number of femto-cells in a short period of time. This is a big waste of UE energy and network signaling. Further, there can be a ping pong effect on cell reselection between femto-cells and macro cells. For instance, operators tend to use small (or just "enough") femto-cell transmission power to minimize femto-cell interference. However, due to the complex indoor propagation environment, it becomes very hard to choose appropriate transmission power for the femto-cell. Therefore, adaptive transmission power control and cell selection/reselection offsets are used to ensure coverage and prevent the ping pong effect. Obviously the HNB needs to be sensitive to its macro layer interference or the HNB will cause a net reduction in coverage in the macro environment. Similar effects, but less dramatic overall, occur with mutual HNB-to-HNB interference cases. However, in general HNBs seek to constantly keep their powers low to avoid such situations while maintaining adequate power for their clients. Additionally, an ad hoc cellular system that consists of femto-cells of HNBs and macro layer mobile user equipment is by definition changeable. No settings, regardless of how optimal, are stable for long, and will change over time.

There are many traditional inter-frequency and power control algorithms defined in the art, however these solution require some amount of coordination or control between the hierarchical layers of the communication system. Even within the one layer of the HNB environment there is no coordination between HNBs.

GB 2 445 990 A discloses an arrangement in which an access point for radio communication system transmits a pilot signal. The access point can operate in different modes with the pilot signal transmit power being controlled differently. Specifically, a first mode processor controls a pilot signal controller such that when it is in the first mode the access point is arranged to vary a pilot signal transmit power in accordance with a first transmit power profile, e.g. from a minimum value to a maximum value, the later value corresponding to the coverage area. A second mode processor controls the pilot signal transmit power in accordance with a second transmit power profile in a second mode of operation. Specifically, the transmit power may be constant (e.g. at maximum value) during the second mode operation. A transition processor is arranged to transition the access point from the first mode to the second mode in response to receiving an access request for a remote station.

Therefore, what is needed is power control optimization on the part of the HNBs that can resolve the above problems.

BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:

FIG. 1 shows a block diagram of a system of the present invention;
FIG. 2 shows a diagram of particular communication connections in FIG. 1;
FIG. 3 shows a graph of an overlay cell throughput improvement, in accordance with a first embodiment of the present invention;
FIG. 4 shows a graph of an underlay cell throughput improvement, in accordance with a first embodiment of the present invention;
FIG. 5 shows a graph of Cumulative Distribution Functions of CPICH for different HNB activity factors where HNBs do not transmit control channels when they are OFF;
FIG. 6 shows a graph of Cumulative Distribution Functions of CPICH for different HNB activity factors where HNBs transmit overhead power when OFF;
FIG. 7 shows a graphical representation of the ON/OFF duty cycle of CPICH, in accordance with the first embodiment of the present invention;
FIG. 8 shows a graphical representation of the throughput improvement, in accordance with the first embodiment of the present invention;
FIG. 9 shows a graphical representation of the HIGH.LOW duty cycle of CPICH, in accordance with the second embodiment of the present invention;
FIG. 10 shows a graphical representation of an alignment of duty cycles of idle UEs, in accordance with the second embodiment of the present invention;
FIG. 11 shows a graphical representation of a non-overlapping alignment of duty cycles of femto-cells, in accordance with the second embodiment of the present invention;
FIG. 12 shows a flow chart illustrating a method, in accordance with the first embodiment of the present invention; and
FIG. 13 shows a flow chart illustrating a method, in accordance with the second embodiment of the present invention.

Skilled artisans will appreciate that common but well-understood elements that are useful or necessary in a commercially feasible embodiment are typically not depicted or described in order to facilitate a less obstructed view of these various embodiments of the present invention.

DESCRIPTION OF THE PREFERRED EMBODIMENTS

The present invention provides a technique to partially disable HNB control channels such that the impact on macro layer capacity is minimized while at the same time ensuring seamless handovers and lower session startup times. In particular, the present invention can partially disable control channels, such as when there is no active user attached to a HNB. However, the present invention does not completely disable the control channels as a complete disabling will cause failure of macro cell to HNB handovers.

The following description focuses on embodiments of the invention applicable to a CDMA cellular communication system and in particular to a 3rd Generation Cellular communication system such as a High Speed Downlink Packet Access (HSDPA) UMTS System. However, it will be appreciated that the invention is not limited to this application but may be applied to many other cellular communication systems. Also, the description will focus on scenarios of a serving HNB of a femto-cell. However, it will be appreciated that the described principles apply equally to other hierarchical scenarios.

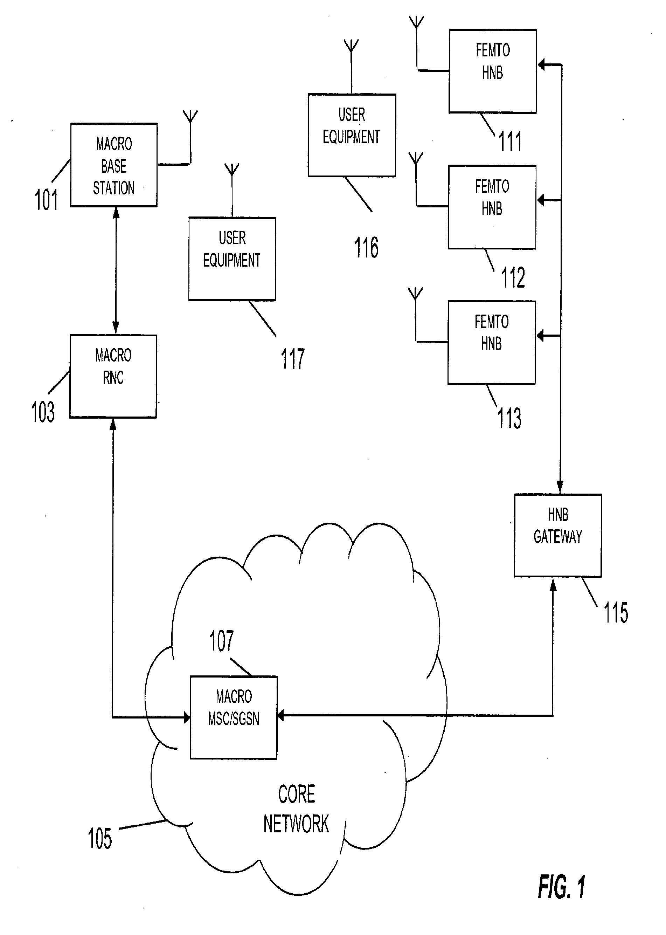

FIG. 1 illustrates an example of a multi-layer cellular communication system which in this specific example is a 3G UMTS cellular communication system. In the system, a macro-layer is formed by macro-cells supported by base stations 101 (one shown). Furthermore, an underlay layer of pico-cells or femto-cells are supported by a large number of small base stations which henceforth will also be referred to as Home NodeBs (HNB) 111-113. Specifically, each HNB may have an intended coverage of a single house or dwelling, and for a macro-cell coverage area of several hundred meters there may be hundreds of these underlay cells each supported by an individual HNB. In the system, each HNB is controlled by a central server such as a HNB-gateway (HNB-GW) 115. However, it should be recognized that each HNB can operate unilaterally and autonomously, in accordance with the present invention.

In the specific example of FIG. 1, three Home NodeB (HNB) 111-113 are illustrated in which each HNB supports a femto-cell within a dwelling and having a coverage area of typically ten to fifty meters. Each HNB 111-113 is coupled to a femto gateway, such as HNB-GW 115. HNB 111-113 and HNB-GW 115 may be co-located in the same physical unit. The HNB-GW 115 is furthermore coupled to a core network 105 which interfaces to other radio access networks, MSCs, and RNCs. An HNB registration server can be provided in any of a MSC/SGSN 107, gateway 115, core network 105, or as a standalone element. In the example, the HNB-GW 115 is coupled to a macro MSC 107 of the overlayer macro-cells serving a macro RNC 103. It should be recognized that the MSC function need not be present if already incorporated into the associated RNC 103 or HNB-GW 115.

The system further comprises a number of macro-cell base stations 101 (for clarity only one base station .is illustrated in FIG. 1). Each of the base stations 101 supports a macro-cell, for example, with a coverage area of several hundred meters. The base stations 101 implement the required functionality of a UMTS base station in order to support UMTS communications. One macro-cell base station 101 serving its own UE 117 overlays the femto-cells 111 serving the UE 116, while the other HNBs 112, 113 are neighboring femto-cells.

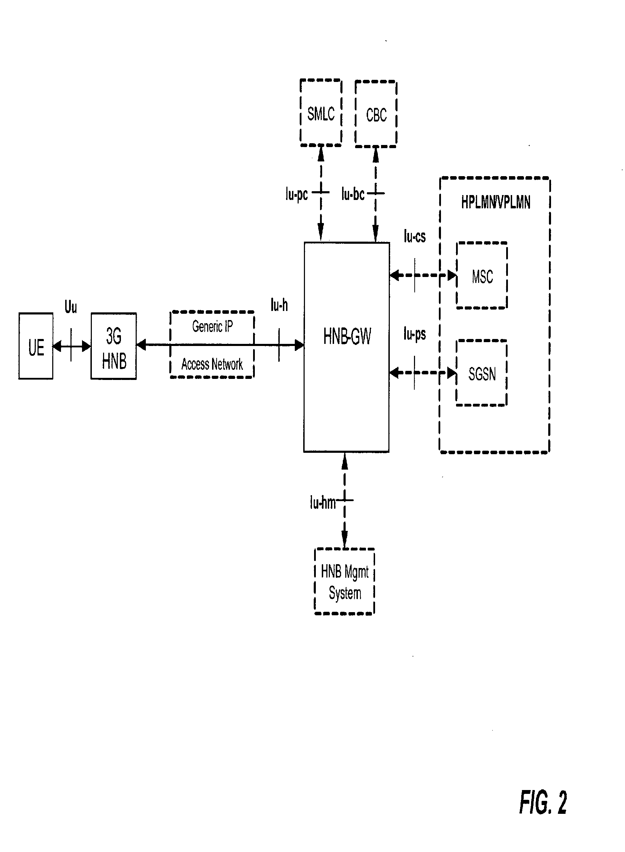

It should be recognized that the femto HNB 111-113 and/or HNB-GW 115 of the invention can be represented equally as an HNB Gateway or Controller, HNB Registration Server (RRS), Virtual Private Network (VPN), Generic Access Network (GAN), Universal Mobile Access (UMA), or any other server, network gateway, or authority as are known in the art. FIG. 2 shows a specific network architecture and signal planes utilized for an HNB of the present invention.

In practice, a problem arises in residential deployments of underlay networks where the deployment process in changeable and ad hoc. Femto-cells are expected to be installed by end users rather than operators. Due to complicated indoor propagation environment and arbitrary femto-cell deployment, femto-cell planning becomes very challenging if not impossible. To ensure coverage, a femto-cell may have to adopt high control channel power which could lead to large overlapping area with neighboring cells (macro-cells or femto-cells). Moreover, since femto-cells typically support closed access, such overlapping coverage will introduce large interference towards nearby unallowed UEs. In a residential deployment, the pilot power setting is defined by the requirements to (a) achieve an adequate coverage area within the residence, and (b) ensure the pilot power is balanced at the cell edge with respect to any neighbors. In the absence of any strong signaled neighbors, requirement (a) will define the boundaries. In an area with a high density of neighbors, requirement (b) will dominate. However, in general, both conditions must be considered.

In operation, a user connects a HNB to an HNB server or gateway. The gateway updates the HNB with the distance with respect to any neighboring cells, the neighbors' power levels, and any necessary identifying information (e.g. frequency and scrambling codes). Using this information the HNB can assign an approximate pilot power level based on the maximum of: (a) the minimum power needed to achieve coverage in close proximity to the cell, and (b) the minimum power needed for a UE to receive a comparable power from both the HNB pilot and a neighboring HNB pilot, in close proximity to the cell. This power level allows a call to be made on the HNB in the presence of interference, and that a UE is able to measure the power levels of all nearby neighbor's pilot signal levels.

During registration, the HNB is also required to calculate suitable power limits for any mobile or user equipment it serves. The downlink (DL) and uplink (UL) power limits ensure that the HNB does not cause any excessive interference on its neighbors. Power limits are based on the power that may be received by its neighbors. In order to calculate the received power, the HNB must calculate the path loss with respect to each neighbor.

After connecting a UE for the first time, the attached UE is requested to measure the power levels of all neighboring cells. Since the pilot power has been set approximately correctly during the registration phase, the UE is able to accurately measure the neighbors' pilot powers. If its own HNB CPICH were set too high, all neighbors' CPICH powers would be unreadable, swamped by the local pilot. In addition, this does not consider interference in the macro-cell.

Also, since appropriate power limits have been set for a HNB-attached UE, the UE can typically operate safely within the HNB coverage area, without causing undue interference to its neighbor HNBs. However, an HNB can interfere with the macro-layer base station that is sharing a co-channel frequency between the HNB and macro, as well as neighboring UEs 116, 117 being able to interfere with each other.

The present invention provides suitable interference management techniques in the HNB itself. In this way, HNBs can be managed such that minimal interference issues are likely to be seen that will impact on normal HNB performance for the majority of all likely deployment scenarios when operating co-channel (macro/HNB), which is the problem to be solved in the present invention. In the present invention, interference mitigation measures are utilized at the HNB to ensure good operation, as will be detailed below.

As described above, results have indicated that fixed control channel power of the HNB results in macro cell performance being significantly affected. In fact, even the individual HNB capacity drops as a result of the control channel interference of the neighboring HNBs. It has also been observed that this adversely impacts macro CPICH coverage.

These trends are particularly true when the HNBs operate at higher transmit powers thereby necessitating efficient means to turn off HNB control channels when there is no active home user equipment (HUE). The present invention provides a technique to alleviate the impact of HNB control channel power on HSDPA Macro NodeB downlink capacity and the impact of inter-HNB interference on HNB downlink performance.

A first embodiment of the present invention utilizes several simulation assumptions as shown in Table 1.

**Table 1**

| Simulation assumptions | |
|---|---|
| **Parameter** | **Value** |
| | |
| Cell layout | Hexagonal grid, 19 cell sites, 3 sectors per site |
| Inter-site distance | 1732 m |
| Carrier frequency | 2 GHz |
| Bandwidth | 5 MHz |
| Total BS transmission power | 20 W |
| P-CPICH power | 2 W |
| HS-SCCH power | 1 W |
| HS DSCH power | 14 W |
| External wall penetration loss | 10 dB |
| Internal wall penetration loss | 5 dB |
| Log-normal shadowing towards MNB | 8 dB standard deviation |
| Log-normal shadowing towards HNB | 10 dB standard deviation |
| UE noise figure | 9 dB |
| Speed | 3 km/h |
| MNB to UE (UE is outside) | $128.1 + 37.6\log10(d_{km})$ |
| MNB to UE (UE is inside) | $128.1 + 37.6\log10(d_{km}) + qW + L_{ow}$ |
| HNB to UE (UE is in the same house as HNB) | $37 + 20\log10(d_m) + qW$ |
| HNB to UE (UE is in a different house as HNB) | $\max(128.1 + 37.6\log10(d_{km}), 37 + 20\log10(d_m)) + qW + L_{ow}$ |
| HNB to UE (UE is outside) | $7 + 56\log10(d_m)$ |
| Scheduler | Proportional fair scheduler |
| Minimum inter-HNB distance | 25 m |
| Minimum distance between HNB and macro UE | 15 m |

$W$     Internal wall penetration loss
$L_{ow}$   External well penetration loss
$q$     Number of internal walls between the HNB and the UE and is assumed to be between 0 and 2

Table 2 lists the variable parameters whose impact has been studied. The total number of HNBs in the cell is assumed to be 200 and all macro UEs are assumed to be outdoor UEs.

**Table 2**

| Variable parameters | |
|---|---|
| **Parameter** | **Comment** |
| Activity factor | Fraction of time a given HNB is active. Chosen from the set {0, 0.125, 0.25, 0.375, 0.5, 0.75, 1.0} |

(continued)

| Variable parameters | |
|---|---|
| **Parameter** | **Comment** |
| Transmit power of HNB | Fixed to be 20dBm |
| HNB control channel power | Assumed to be 25% of maximum transmit power |

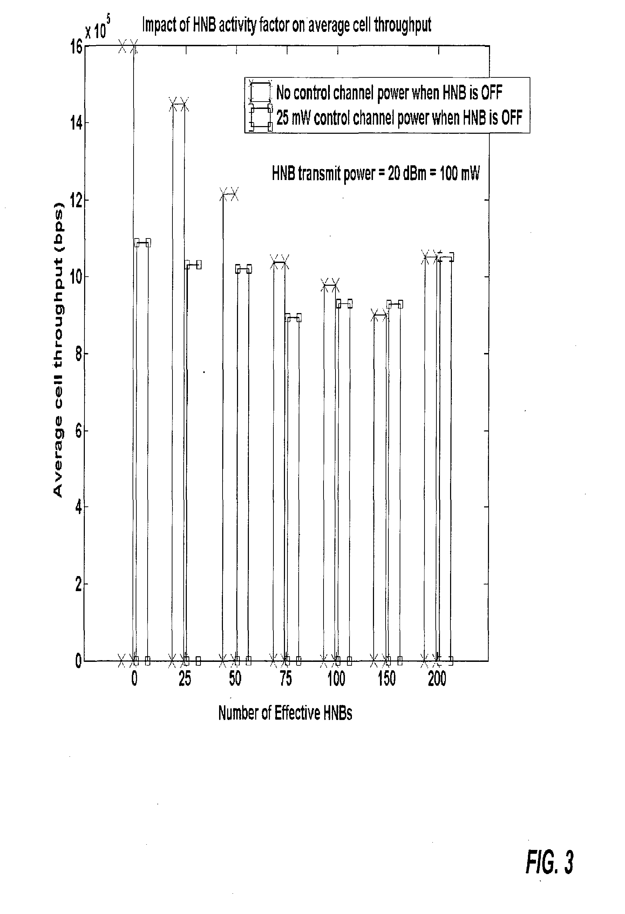

Using the above assumptions and parameters, a simulation was performed to study the degradation in macro cell throughput and HNB throughput due to the HNB control channel. We consider 50 users uniformly distributed in the cell and full buffer TCP traffic for each of them. FIG. 3 shows the average macro cell throughput as a function of the number of effective HNBs, with a HNB transmit power of 20 dBm (100 mW). The number of effective HNBs is the product of the total number of HNBs in the cell and the activity factor. Cell throughputs for two scenarios, one where the HNB does not transmit any power when it is OFF and the other where the HNB transmits 25% of its maximum transmit power (for control channels) when it is OFF, have been shown.

The results indicate that HNB control channels significantly impact a throughput performance of a macro cell. When control channels are transmitted even when HNBs are not active, higher activity factors do not cause significant further reduction in macro throughputs. These results suggest that, to minimize the impact on macro cell performance, a suitable technique is found to turn off the control channels of HNBs when there are no active UEs attached to them. Note that there is a marginal increase in throughput when the effective number of HNBs is 200 because TCP timeout occurs for users with very poor channel conditions and subsequently those users are dropped. The resources are then shared among the remaining users.

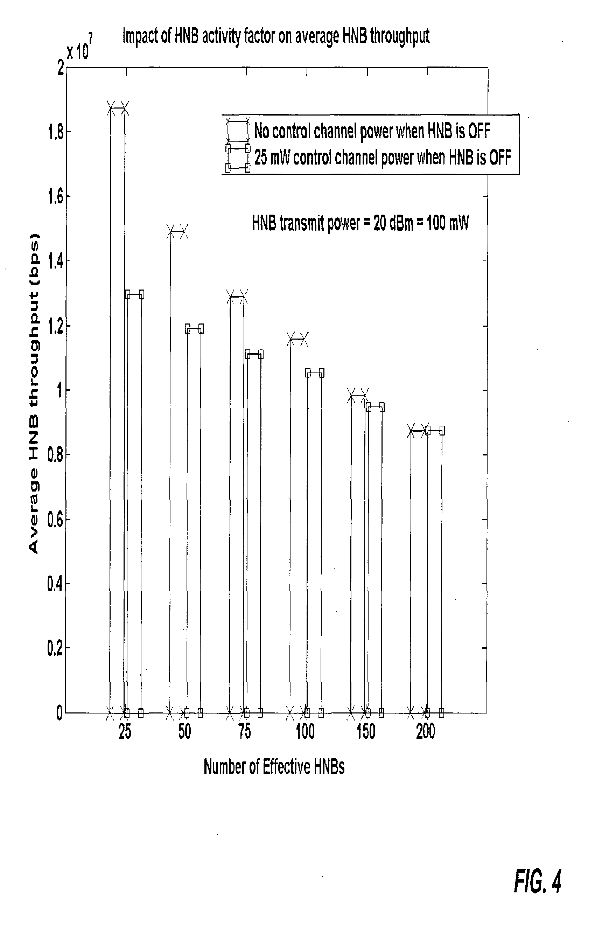

FIG. 4 gives the average HNB throughput as a function of the number of effective HNBs. The HNB throughput has been obtained using a modified Shannon equation. The SINR experienced by a HUE that is attached to HNB *i* is given by:

$$SNR_{UE,i} = \frac{\dfrac{\left(P_i^{HNB} - P^{overhead}\right)}{L_{UE,i}^{HNB}}}{\sum_k \dfrac{P_k^{MNB}}{L_{UE,k}^{MNB}} + \sum_{m \neq i} \dfrac{P_m^{HNB}}{L_{UE,m}^{HNB}} + N}$$

The throughput of HNB *i* is computed as:

$$C = W \log\left(1 + \frac{SNR_{UE,i}}{2}\right)$$

where,

$P_m^{HNB}$     is the transmit power of HNB *m*

$P^{overhead}$     is the overhead power (for control channels)

$P_k^{MNB}$     is the transmit power of macro NodeB *k*

$L_{UE,k}^{MNB}$     is the pathloss between the HUE and macro NodeB *k*

$L_{UE,m}^{HNB}$     is the pathloss between the HUE and HNB *m*

$N$     is the noise power

$W$     is the HNB system bandwidthAgain it can be seen that the individual throughputs of the HNBs drop when the control channels are turned on.

Macro NodeB CPICH coverage is another important indicator of macro UE performance. This section studies the impact of the presence of HNBs on macro CPICH coverage. For a macro UE, the CPICH $E_c/N_0$ from macro NodeB i is given by:

$$\frac{E_c}{N_0} = \frac{\dfrac{P_{CPICH}}{L_{UE,i}^{MNB}}}{\displaystyle\sum_k \dfrac{P_k^{MNB}}{L_{UE,k}^{MNB}} + \sum_{m \neq i} \dfrac{P_m^{HNB}}{L_{UE,m}^{HNB}} + N}$$

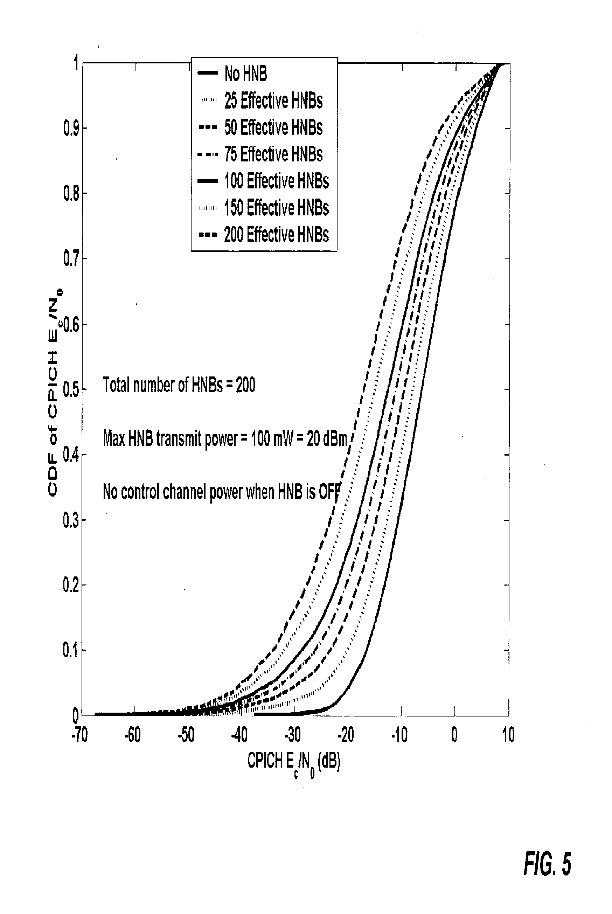

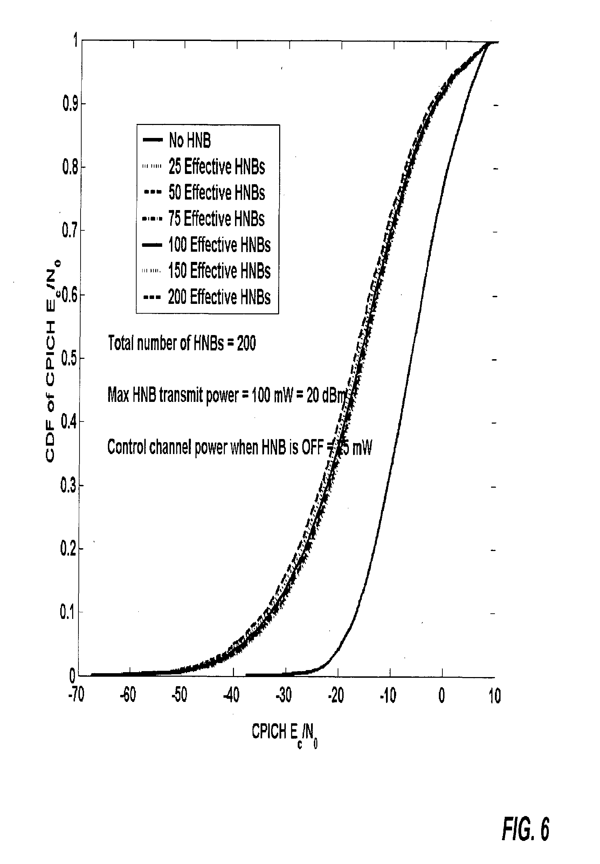

where $P^{CPICH}$ is the CPICH power from macro NodeB $i$. The Cumulative Distribution Functions (CDFs) of CPICH $E_c/N_0$ for different HNB activity factors are shown in FIG. 5 for the case where HNBs do not transmit control channels when they are OFF. Similarly, FIG. 6 gives the CDFs for the case when HNBs transmit overhead power when OFF. These plots correspond to a maximum HNB transmit power of 20 dBm (100 mW). These coverage results corroborate the fact that just the control channel power of HNB has a strong negative impact on macro UE performance.

The above results motivate the finding of a solution for disabling control channels when there is no active user attached to a HNB. However, disabling of control channels completely will cause failure of macro cell to HNB handovers. In addition, session startup times can be longer. Therefore, the present invention proposes a scheme to partially disable the HNB control channels such that the impact on macro layer capacity is minimized while at the same time ensuring seamless handovers and lower session startup times.

It is likely that HNB will have a location area that is distinct from its neighboring HNBs and macro cell. This will ensure that the UE triggers a routing area update immediately upon camping in the HNB or leaving the HNB. It is assumed that when the UE moves from the HNB to the macro cell, it performs one or more of a location/tracking/routing area update (collectively referred to herein as a "location" update) to the macro cell.

The information that the UE has now moved to the macro cell is conveyed to the HNB via the HNB gateway (HNB-GW). In order to re-use messages on the Iu interface, this location update procedure can be considered as inter-SGSN routing area update. Therefore, the HNB-GW will be informed of the UE movement when the HNB-GW receives the SRNS context request from the SGSN. After realizing that the UE has moved out, the HNB will start transmitting the CPICH control channel in an ON-OFF cycle. The ON-OFF cycle can be pseudorandom (although not necessary) to ensure that any UE trying to access this HNB can read the CPICH within a specified time duration. The ON-OFF cycle could also be periodic. However, one caveat when the ON-OFF cycle is periodic is that it is possible that a nearby UE completely fails to detect the HNB because the neighbor cell measurement period of the UE coincides exactly with the OFF periods of the HNB CPICH. Two parameters of this ON-OFF cycle need to be determined: the minimum length of the ON period and the maximum length of the OFF period (i.e., the duty cycle). The maximum length of the OFF period depends on the maximum of the neighbor cell measurement interval of UEs and the tolerable delay in camping on the HNB.

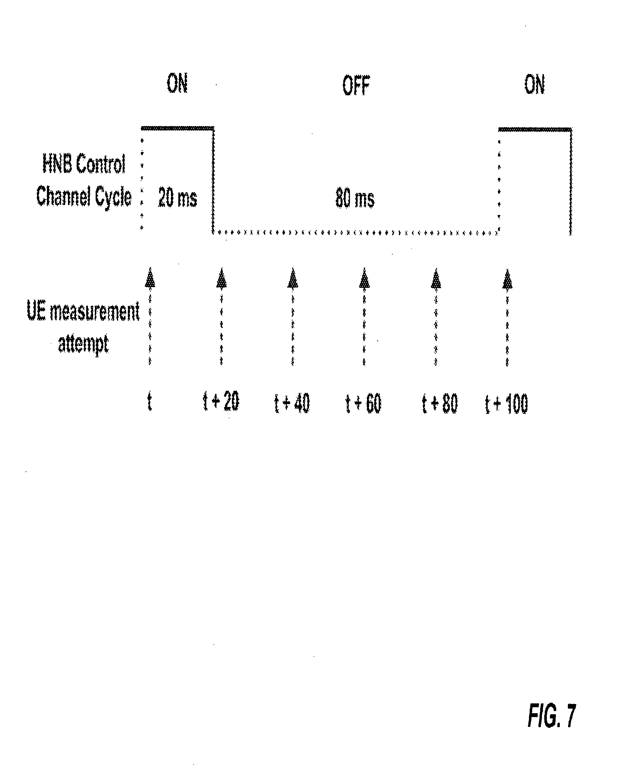

In FIG. 7, it is assumed that the UE makes a neighbor cell measurement at time $t$ and the macro layer is stronger at that instant. Immediately after $t$, the HNB strength becomes higher. This enforces a constraint that the OFF period equals (floor(Tolerable delay) - Measurement interval), where floor(x) is the highest integer multiple of Measurement Interval less than x. For example, if a UE makes a neighbor cell measurement every 20 ms and the tolerable delay for camping is 105 ms, then the OFF period can be as high as (floor(105) - 20) = 100 - 20 = 80 ms. Note that when the tolerable delay is less than measurement interval, the control channel will be always ON. However, in reality, when the UE moves from a macro to the HNB, it is still under the coverage of macro layer and hence the tolerable camping delay can be much higher.

The ON period should be at least equal to the measurement interval between two neighbor cell measurements by the UE. The HNB will revert to continuous transmission of control channel when an eligible user attaches to it. Note that some ineligible users can also try camping on the HNB but in this case, the HNB will continue to transmit control channel in ON-OFF cycles.

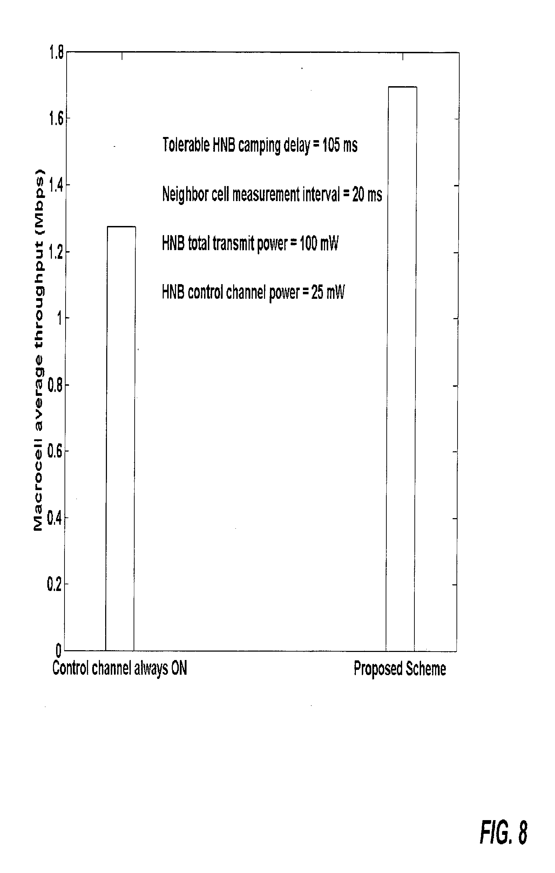

The macrocell throughput was numerically studied with an activity factor of 0.5. FIG. 8 compares the performance when the inactive HNBs have their control channels turned ON always and when their control channels follow an ON-OFF pattern with a 20% duty cycle. With the scheme proposed, the macro cell average throughput increases from 1.275 Mbps to 1.695 Mbps, as compared to when the control channel is always ON.

In accordance with a second embodiment of the present invention, the femto-cell control channel power can follow a HIGH/LOW power pattern as an alternative to the ON/OFF pattern of the first embodiment. The lower limit of the femto-cell control channel power is determined by the required power to cover users having active connections with the femto-cell. The upper limit of the femto-cell control channel power is determined by the expected femto-cell coverage. The femto-cell knows when its users will wake up to listen/measure its control signals, thus the femto-cell operates at the high power level only during those time intervals. This embodiment also envisions non-overlapping timing between femto-cells and coordinating discontinuous receive (DRX) timing of UE devices served by same femto-cell, as will be detailed below.

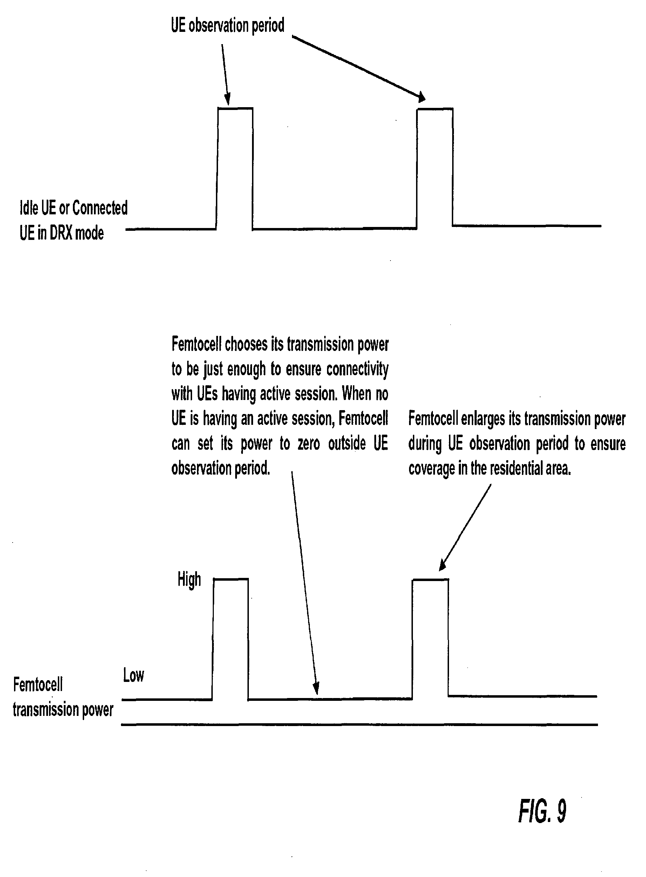

Referring to FIG. 9, a UE in idle/sleep mode will periodically wake up to observe if there is a signal for that UE during a specific interval (e.g. a paging interval where the UE can listen to potential paging messages at predetermined time slots, or where the UE can request network access). Similarly, for a connected UE in DRX mode, an enhanced HNB, or H(e)NB, would use high control channel power during the time slots that the UEs in DRX mode wake up to perform certain tasks (e.g. make CQI measurements between "DRX ON duration" or listen for a potential incoming data burst at the predetermined time slots), and to use relatively lower control channel power to ensure connectivity with UEs in active sessions.

During the wake up interval, a serving femto-cell will transition between a LOW and HIGH control channel Tx power level. The particular LOW Tx power level is chosen to be just enough to ensure connectivity with UEs having active session. Optionally, when no UE is having an active session, the femto-cell can set its LOW power limit to zero outside UE observation period. During the particular HIGH Tx power level, the femto-cell increases its transmission power during UE observation period to ensure coverage in the residential area.

In this embodiment, when powered on, a femto-cell measures the signal strength of interfering neighboring cells. It determines its transmission power based on the measured interference level and expected coverage (e.g. RF distance=100dB). The femto-cell only employs high power when the idle/sleep mode or connected DRX users wake up to perform certain tasks (e.g. listen to a paging interval, make measurements, or request network access). In all other situations, the femto-cell's power is chosen to be just enough to ensure connectivity with users in active sessions, thereby reducing interference as well as ensuring coverage.

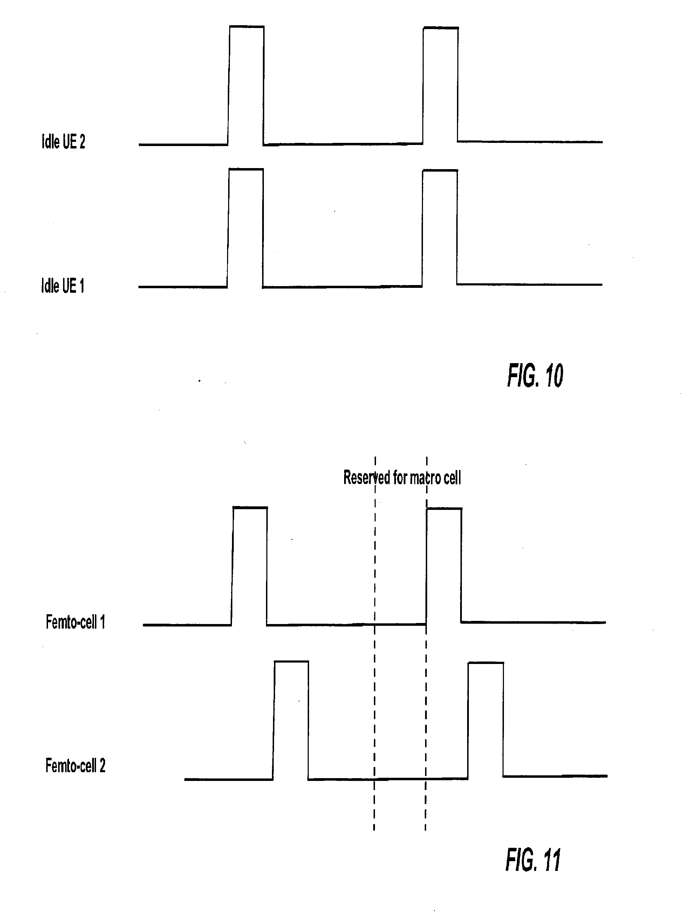

As shown in FIG. 10, the femto-cell can align the wake-up time slots of its camping UEs, or similarly align the DRX offsets of its connected UEs in DRX mode, so that it can use high power only during their common wake-up time. Note that although the femto-cell knows the "DRX on duration" of its connected UEs, it may not know the paging occasions of its camping UEs. Therefore, some network entity (e.g. a paging controller, HNB-GW, femto RNC, femto MSC) may need to allocate all UEs camping on a certain femto-cell to the same paging group with the same paging occasions, and the femto-cell needs to acquire this information from either the network or its UEs. To avoid UL channel access collision, the transmission opportunities (e.g. ranging code, resource blocks reserved for UL channel access) of UEs receiving paging information in the same paging occasion can be pre-configured to be different from each other to avoid uplink collisions between user equipments, which can be accomplished since the number of UEs supported by a femto-cell could be quite small (e.g. one to four users). Moreover, a UE makes CQI measurements between consecutive "DRX ON durations", and the femto-cell does not know when the UE makes such measurements. Thus the femto-cell can negotiate and align the CQI measurement interval with its UEs to further reduce the fraction of time it operates at high power.

Additionally, and as shown in FIG. 11, neighboring femto-cells can adopt non-overlapping high power time slots to reduce their mutual interference and improve user scanning efficiency. For example, when powered on, a femto-cell will scan the environment and determine the high power time slot of its neighboring femto-cells and choose a non-overlapping high power slot. Alternatively, the femto-cell can send a message including the observed overlay macro cell ID and/or its location to a centralized controller (e.g. femto-cell management system) which will determine the relative timing (with respect to the overlay macro cell) of the high power slot of this femto-cell. The centralized controller will assign different relative high power slot timings for femto-cells deployed under the same overlay macro cell or in close neighbourhood. If all the femto-cells in a neighborhood happen to power on at the same instant (e.g. after an unexpected power outage), random backoff mechanism can be used so that neighboring femto-cells tend to choose different high power time slots. Furthermore, femto-cells can choose (or configured by the femto-cell management system) not to use high power for some common time slots (e.g. 2ms every 20ms) which can be used by macro BSs to schedule its users that are interfered by femto-cells. Aside from ensuring coverage and reducing interference, another benefit of this embodiment is to help UE to scan its femto-cell, and improve macro-to-femto mobility performance. For example, an allowed UE can be pre-configured with the timing characteristic of its femto-cell high power slot with respect to the overlay macro cell timing. After entering the overlay macro cell, the UE will search for its femto-cell only during pre-determined time slots to save energy and reduce unnecessary measurements and/or access attempts of inaccessible femto-cells with non-overlapping high power time slots. To ensure that a UE can immediately identify its femto-cell during this high power slot, femto-cell global cell ID or some other unique identifier to distinguish this femto-cell from femto-cells in the neighbourhood (e.g., under the overlay macro cell) needs to be included in the transmission. Aside from pre-configuration, another way for a UE to obtain the relative timing of its femto-cell is through message exchange via the overlay macro cell. The UE stores the identification of the overlay macro BS and sends a message to the overlay macro BS whenever it enters its coverage. The network will then notify the corresponding femto-cell of the UE's presence. The femto-cell will then tell the overlay macro BS the characteristics (e.g. period, offset, modulation/coding schemes used, etc) of its high power transmission, which will be forwarded to the UE to facilitate its searching for its femto-cell. Alternatively, the overlay macro-cell BS may know when a UE will wake up and tell the femto-cell HNB the UE wake-up period. Or the macro-cell BS may determine when a femto-cell HNB will wake up and tell the UE the femto-cell HNB wake-up period. Or the femto-cell HNB can send (tunnel) a message over the macro-cell layer to the UE defining the wake-up periods. Or the UE can send (tunnel) a message over the macro-cell layer to the femto-cell HNB defining the wake-up periods. It should be noted that the power level to ensure smooth hand-in (handover from macro cell to femto-cell) may be larger (or smaller) than the power level to ensure femto-cell coverage and the period for the power level to ensure smooth hand-in may not be the same as the power level to ensure femto-cell coverage either. Thus we may need to support three femto-cell control channel power levels with different periods and offsets. On the other hand, the control channel transmission power levels to ensure smooth hand-in, idle UE coverage, or active UE connectivity may be equivalent. Then it would just be needed to support one femto-cell control channel power, but the femto-UE scanning interval will be coordinated between the UE, femto-cell, and/or the network to help UE search for its femto-cell. The embodiment described here can be easily extended to incorporate these scenarios.

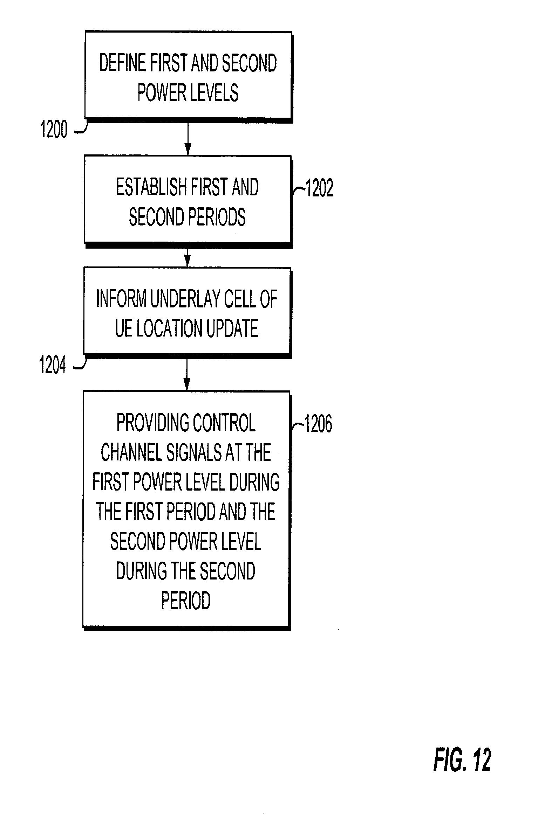

FIG. 12 illustrates an example of a method for power control in a multi-layer cellular communication system in accordance with the first embodiment of the present invention.

The method includes a step 1200 of defining a first power level and a second power level for control channel signal transmissions from an underlay cell, wherein the first power level is higher than the second power level. In practice, the first power level has the control channel signal transmissions turned ON when there are active users attached to the underlay cell, and the second power level has control channel signal transmissions turned OFF when there are no active users attached to the underlay cell.

A next step 1202 includes establishing a first period and a second period for control channel signal transmissions, associated with the first and second power levels, respectively. The periods can be periodic or pseudo-random. For example, the second period can have a pseudo-random length chosen such that user equipment requesting to camp on the underlay cell can camp on the underlay cell within a predefined camping delay tolerance, as previously described. The first period can also be pseudo-random. In addition, both periods can be changed dynamically. Preferably, a duty cycle of the first and second periods also depends on a neighbor cell measurement interval of the user equipment. In particular, the first period can be at least equal to the neighbor cell measurement interval of the user equipment, and the second period can be substantially equal to the highest integer multiple of the neighbor cell measurement interval less than the camping delay tolerance minus the neighbor cell measurement interval.

A next step 1204 includes informing an underlay cell of a location area update made by a user equipment when the user equipment hands off from the underlay cell to an overlay cell, wherein the informing step 1204 triggers the next, providing step 1206. This step 1204 can also include informing an underlay cell of a location area update made by a user equipment when the user equipment hands off from the overlay cell to an underlay cell.

A next step 1206 includes providing, by the underlay cell, control channel signals at the first power level during the first period and the second power level during the second period. In this first embodiment, the first power level is ON, and the second power level is OFF.

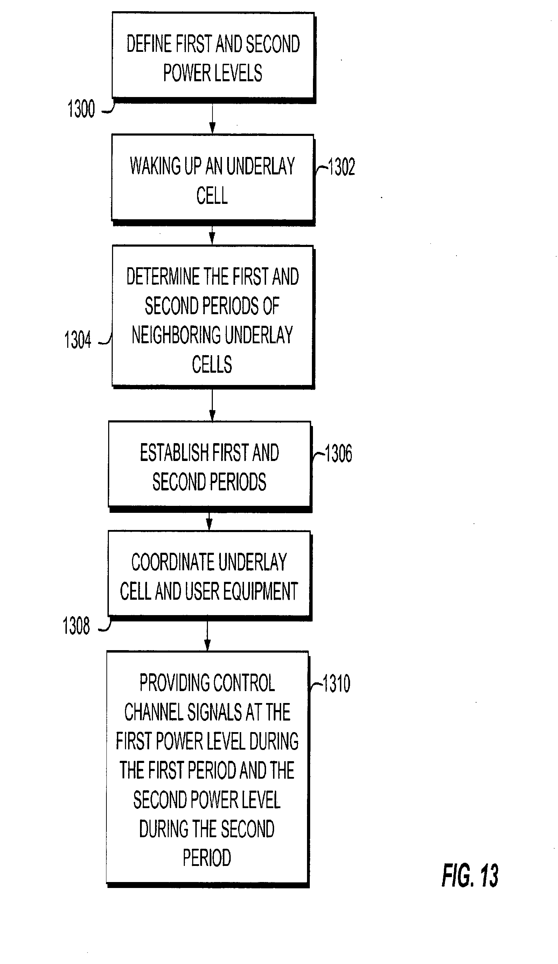

FIG. 13 illustrates an example of a method for power control in a multi-layer cellular communication system in accordance with the second embodiment of the present invention.

The method includes a step 1300 of defining a first power level and a second power level for control channel signal transmissions from an underlay cell, wherein the first power level is higher than the second power level. In practice, the first power level (HIGH) is sufficient to cover the entire underlay cell, and the second power level (LOW) is only sufficient to maintain a connection with user equipment having an active connection within the underlay cell.

A next step 1302 includes the waking up of the underlay cell.

A next step 1304 includes determining, by the underlay cell, the first and second periods of neighboring underlay cells, and optionally overlay cell timing.

A next step 1306 includes establishing a first period and a second period for control channel signal transmissions, associated with the first and second power levels, respectively. The periods can be periodic. Preferably, this step includes choosing, by the underlay cell, its own first and second periods. The choosing step can include choosing substantially the same first and second periods for the user equipments, and wherein transmission opportunities (e.g. ranging code, resource blocks reserved for UL channel access) of user equipments receiving paging information are configured to be different to avoid uplink collisions between user equipments. In addition, the choosing step can include choosing non-overlapping first period from the neighboring underlay cells. This can also include choosing the first period offset with respect to the overlay cell timing, where user equipment can be notified of this offset.

A next step 1308 includes coordinating the underlay cell and user equipment such that the user equipment only wakes-up during the first period to scan for the underlay cell. This step can include any one of the group of; a) an overlay cell determining when the user equipment will wake up and informing the underlay cell when the user equipment will wake up, b) an overlay cell determining when the underlay cell will wake up and informing the user equipment when the underlay cell will wake up, c) the underlay cell sending (tunneling) a message to the user equipment via the macro cell, and d) the user equipment sending (tunneling) a message to the underlay cell via the macro cell. Preferably, an underlay cell sends one message (to save overhead) to all the active user equipment in the underlay cell such that all the active user equipment in the underlay will wake-up to make measurements at the same time.

A next step 1310 includes providing, by the underlay cell, control channel signals at the first power level during the first period and the second power level during the second period. In this first embodiment, the first power level is HIGH, and the second power level is LOW.

EP 2 384 595 B1

Advantageously, the present invention will minimize the impact of HNB control channel interference on macro cell performance, ensure femto-cell coverage, and smooth handover. The present invention can also; inform the HNB via the HNB gateway of the location area update made by the UE when it moved from HNB to macro cell, determine the duty cycle of the HNB control channel power depending on the neighbor cell measurement interval of UEs and the tolerable HNB camping delay, and transmit the HNB control channel in an ON-OFF or HIGH-LOW power mode with the duty cycle determined.

It will also be appreciated that although the above description mainly focuses on a LTE/WiMAX/UMTS embodiment, it is equally applicable to other systems and can be applicable to hybrid communication systems using different radio access technologies. For example, the macro base station may be a UMTS base station whereas the HNB may be a GSM (or LTE) base station capable of supporting GSM air interface communications but not UMTS air interface communications. Thus, the same method of the invention can be used. However, in the example, the user equipment is a dual mode remote station providing intersystem communication between UMTS to GSM. Moreover, the invention can also be applied when overlay cell and underlay cell use different frequency.

Also, although the above description has focused on a HNB, it will be appreciated that the described principles are equally applicable to a situation where these are integrated into a different physical or logical network element (e.g. micro/pico cell.

It will be understood that the terms and expressions used herein have the ordinary meaning as is accorded to such terms and expressions by persons skilled in the field of the invention as set forth above except where specific meanings have otherwise been set forth herein.

The sequences and methods shown and described herein can be carried out in a different order than those described. The particular sequences, functions, and operations depicted in the drawings are merely illustrative of one or more embodiments of the invention, and other implementations will be apparent to those of ordinary skill in the art. The drawings are intended to illustrate various implementations of the invention that can be understood and appropriately carried out by those of ordinary skill in the art. Any arrangement, which is calculated to achieve the same purpose, may be substituted for the specific embodiments shown.

The invention can be implemented in any suitable form including hardware, software, firmware or any combination of these. The invention may optionally be implemented partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate.

Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality.

**Claims**

1. A method for power control in a multi-layer cellular communication system, the method comprising the steps of:

   defining (1200, 1300) a first power level and a second power level for control channel signal transmissions from an underlay cell, wherein the first power level is higher than the second power level;
   establishing (1202, 1306) a first period and a second period for control channel signal transmissions; and
   providing (1206, 1310), by the underlay cell, control channel signals at the first power level during the first period and the second power level during the second period;
   **characterised in that** the second power level has control channel signal transmissions

turned OFF when there are no active users attached to the underlay cell.

2. The method of claim 1, wherein the second period has a pseudo-random length chosen such that user equipment (116, 117) requesting to camp on the underlay cell can camp on the underlay cell within a predefined camping delay tolerance.

3. The method of claim 2, wherein a duty cycle of the first and second periods also depends on a neighbor cell measurement interval of the user equipment (116, 117).

4. The method of claim 1, further comprising the step of coordinating the underlay cell and user equipment (116, 117) such that the user equipment (116, 117) wakes-up during the first period, and wherein the second power level is sufficient to maintain a connection with user equipment (116, 117) having an active connection within the underlay cell, and the periods are periodic.

5. The method of claim 4, further comprising the steps of:

waking up (1302) of the underlay cell; and
determining (1304), by the underlay cell, the first and second periods of neighboring underlay cells;
wherein the establishing step (1306) includes choosing first and second periods for the underlay cell in response to the first and second periods of neighboring underlay cells.

6. The method of claim 5, wherein the choosing step includes choosing a non-overlapping first period from the neighboring underlay cells.

7. The method of claim 6, wherein the choosing step includes notifying user equipment of a first period offset with respect to overlay cell timing.

8. An underlay cell of a multi-layer communication system providing power control, the underlay cell comprising:

a Home NodeB (111, 112, 113) configured for defining a first power level and a second power level for control channel signal transmissions, wherein the first power level is higher than the second power level; configured for establishing a first period and a second period for control channel signal transmissions; and configured for providing control channel signals at the first power level during the first period and the second power level during the second period; **characterised in that** the second power level has control channel signal transmissions turned OFF when there are no active users attached to the underlay cell.

**Patentansprüche**

1. Verfahren zur Leistungsregelung in einem mehrschichtigen zellularen Kommunikationssystem, umfassend die Schritte:

Definieren (1200, 1300) eines ersten Leistungspegels und eines zweiten Leistungspegels für Steuerkanalsignalübertragungen von einer unterlegten Zelle, wobei der erste Leistungspegel höher ist als der zweite Leistungspegel;
Einrichten (1202, 1306) einer ersten Dauer und einer zweiten Dauer für Steuerkanalsignalübertragungen; und
Bereitstellen (1206, 1310) von Steuerkanalsignalen auf dem ersten Leistungspegel während der ersten Dauer und auf dem zweiten Leistungspegel während der zweiten Dauer durch die unterlegte Zelle;
**dadurch gekennzeichnet, dass** die Steuersignalübertragungen auf dem zweiten Leistungspegel abgeschaltet werden, wenn an der unterlegten Zelle kein aktiver Benutzer angebunden ist.

2. Verfahren nach Anspruch 1, wobei die zweite Dauer eine PseudozufallLänge hat, die derart gewählt wird, dass Benutzer-Equipment (116, 117), das auf der unterlegten Zelle verweilen will, innerhalb einer vorher definierten Verweilverzögerungstoleranz auf der unterlegten Zelle verweilen kann.

3. Verfahren nach Anspruch 2, wobei der Tastgrad der ersten und der zweiten Dauer auch von einem Nachbarzellen-Messintervall des Benutzer-Equipment (116, 117) abhängig ist.

**4.** Verfahren nach Anspruch 1, ferner umfassend den Schritt des Koordinierens der unterlegten Zelle und des Benutzer-Equipment (116, 117) derart, dass das Benutzer-Equipment (116, 117) während der ersten Dauer aufwacht, und wobei der zweite Leistungspegel ausreichend ist, um eine Verbindung mit dem Benutzer-Equipment (116, 117), das in der unterlegten Zelle eine aktive Verbindung hat, zu halten, und wobei die Dauern periodisch sind.

**5.** Verfahren nach Anspruch 4, ferner umfassend die Schritte:

Aufwecken (1302) der unterlegten Zelle; und
Bestimmen (1304) der ersten und der zweiten Dauer der benachbarten unterlegten Zellen durch die unterlegte Zelle;
wobei der Schritt des Einrichtens (1306) das Wählen der ersten und der zweiten Dauer für die unterlegte Zelle in Reaktion auf die erste und die zweite Dauer von benacharten unterlegten Zellen umfasst.

**6.** Verfahren nach Anspruch 5, wobei der Schritt des Wählens das Wählen einer nichtüberlappenden ersten Dauer aus den benachbarten unterlegten Zellen umfasst.

**7.** Verfahren nach Anspruch 6, wobei der Schritt des Wählens umfasst, dass das Benutzer-Equipment über einen Versatz der ersten Dauer, die gegenüber dem Timing der Overlay-Zelle benachrichtigt wird.

**8.** Unterlegte Zelle eines mehrschichtigen Kommunikationssystems zur Bereitstellung einer Leistungsregelung, wobei die unterlegte Zelle umfasst:

eine Home NodeB (111, 112, 113), die konfiguriert für das Definieren eines ersten Leistungspegels und eines zweiten Leistungspegels für Steuerkanalsignalübertragungen, wobei der erste Leistungspegel höher ist als der zweite Leistungspegel; die konfiguriert ist für das Einrichten einer ersten Dauer und einer zweiten Dauer für Steuerkanalsignalübertragungen; und die konfiguriert ist für die Bereitstellung von Steuerkanalsignalen auf dem ersten Leistungspegel während der ersten Dauer und auf dem zweiten Leistungspegel während der zweiten Dauer; **dadurch gekennzeichnet, dass** die Steuerkanalübertragungen auf dem zweiten Leistungspegel abgeschaltet werden, wenn an der unterlegten Zelle keine aktiven Benutzer angebunden sind.

**Revendications**

**1.** Un procédé pour un contrôle de puissance dans un système de communication cellulaire multicouches, le procédé comprenant les étapes de :

définir (1200, 1300) un premier niveau de puissance et un deuxième niveau de puissance pour des transmissions de signaux de voie de contrôle depuis une cellule de sous-couche, dans lequel le premier niveau de puissance est plus haut que le deuxième niveau de puissance ;
établir (1202, 1306) une première période et une deuxième période pour des transmissions de signaux de voie de contrôle ; et
fournir (1206,1310), par la cellule de sous-couche, des signaux de voie de contrôle au premier niveau de puissance pendant la première période et au deuxième niveau de puissance pendant la deuxième période ;
**caractérisé en ce qu'**au deuxième niveau de puissance les transmissions de signaux de voie de contrôle sont éteints s'il n'y a pas d'utilisateurs actifs attachés à la cellule de sous-couche.

**2.** Le procédé selon la revendication 1, dans lequel la deuxième période a une longueur pseudo-aléatoire choisie tel de l'équipement utilisateur (116, 117) requêtant de camper sur la cellule de sous-couche peut camper sur la cellule de sous-couche dans une tolérance de délai de camper prédéfinie.

**3.** Le procédé selon la revendication 2, dans lequel un cycle de service des première et deuxième périodes dépend aussi d'un intervalle de mesure de cellule avoisinante de l'équipement utilisateur (116, 117).

**4.** Le procédé selon la revendication 1, comprenant en outre l'étape de coordonner la cellule de sous-couche et l'équipement utilisateur (116, 117) tel que l'équipement utilisateur (116, 117) se réveille pendant la première période, et dans lequel le deuxième niveau de puissance est suffisant pour maintenir une connexion avec l'équipement utilisateur (116, 117) ayant une connexion active dans la cellule de sous-couche, et les périodes sont périodiques.

5. Le procédé selon la revendication 4, comprenant en outre les étapes de :

réveil (1302) de la cellule de sous-couche ; et
déterminer (1304), par la cellule de sous-couche, les première et deuxième périodes des cellules de sous-couche avoisinantes ;
dans lequel l'étape d'établir (1306) comprend choisir des premières et deuxièmes périodes pour la cellule de sous-couche en réponse aux premières et deuxièmes périodes des cellules de sous-couche avoisinantes.

6. Le procédé selon la revendication 5, dans lequel l'étape de choisir comprend choisir une première période sans chevauchement des cellules de sous-couche avoisinantes.

7. Le procédé selon la revendication 6, dans lequel l'étape de choisir inclut notifier l'équipement utilisateur d'un premier décalage de première période relatif au timing de cellule de sur-couche.

8. Une cellule de sous-couche d'un système de communication multicouches fournissant du contrôle de puissance, la cellule de sous-couche comprenant :

un Home NodeB (111, 112, 113) configuré pour définir un premier niveau de puissance et un deuxième niveau de puissance pour des transmissions de signaux de voie de contrôle, dans lequel le premier niveau de puissance est plus élevé que le deuxième niveau de puissance ; configuré pour établir une première période et une deuxième période pour des transmissions de signaux de voie de contrôle ; et configuré pour fournir des signaux de voie de contrôle au premier niveau de puissance pendant la première période et le deuxième niveau de puissance pendant la deuxième période ; **caractérisé en ce qu'**au deuxième niveau de puissance les transmissions de signaux de voie de contrôle sont éteints s'il n'y a pas d'utilisateurs actifs attachés à la cellule de sous-couche.

FEMTO
HNB
111

USER
EQUIPMENT

116

FEMTO
HNB
112

MACRO
BASE
STATION

101

FEMTO
HNB
113

USER
EQUIPMENT

117

MACRO
RNC

103

HNB
GATEWAY

115

107

MACRO
MSC/SGSN

CORE
NETWORK

105

*FIG. 1*

FIG. 2

FIG. 3

FIG. 4

FIG. 5

*FIG. 6*

FIG. 7

Tolerable HNB camping delay = 105 ms

Neighbor cell measurement interval = 20 ms

HNB total transmit power = 100 mW

HNB control channel power = 25 mW

*FIG. 8*

UE observation period

Idle UE or Connected
UE in DRX mode

Femtocell chooses its transmission power
to be just enough to ensure connectivity
with UEs having active session. When no
UE is having an active session, Femtocell
can set its power to zero outside UE
observation period.

Femtocell enlarges its transmission power
during UE observation period to ensure
coverage in the residential area.

High

Low

Femtocell
transmission power

*FIG. 9*

Idle UE 2

Idle UE 1

*FIG. 10*

Reserved for macro cell

Femto-cell 1

Femto-cell 2

*FIG. 11*

FIG. 12

DEFINE FIRST AND SECOND
POWER LEVELS

1300

WAKING UP AN UNDERLAY
CELL ~1302

DETERMINE THE FIRST AND
SECOND PERIODS OF
NEIGHBORING UNDERLAY
CELLS

1304

ESTABLISH FIRST AND
SECOND PERIODS ~1306

COORDINATE UNDERLAY
CELL AND USER EQUIPMENT

1308

PROVIDING CONTROL
CHANNEL SIGNALS AT THE
FIRST POWER LEVEL DURING
THE FIRST PERIOD AND THE
SECOND POWER LEVEL
DURING THE SECOND
PERIOD ~1310

*FIG. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2445990 A